# FASCICULE DE BREVET EUROPEEN

(11) **EP 2 160 521 B1**
(45) Date de publication et mention de la délivrance du brevet: **11.11.2015**
(21) Numéro de dépôt: 08805996.9
(22) Date de dépôt: 13.06.2008
(51) Int. Cl.: F16D 13/68, F16F 15/123, F16F 15/129

(54) **DISPOSITIF D'AMORTISSEMENT D'OSCILLATION DE TORSION POUR EMBRAYAGE A FRICTION, NOTAMMENT POUR VEHICULE AUTOMOBILE**
VORRICHTUNG ZUR DÄMPFUNG DER TORSIONSSCHWINGUNG IN EINER REIBUNGSKUPPLUNG, INSBESONDERE FÜR EIN AUTOMOBIL
DEVICE FOR DAMPENING TORSION OSCILLATION IN A FRICTION CLUTCH IN PARTICULAR FOR AN AUTOMOBILE

(30) Priorité: 26.06.2007 FR 0756041
(43) Date de publication de la demande: 10.03.2010
(73) Titulaire: Valeo Embrayages, 80009 Amiens (FR)
(72) Inventeur: DAST, Pascal, F-80750 Fienvillers (FR)
(74) Mandataire: Tran, Chi-Hai
(86) Numéro de dépôt international: PCT/FR2008/051061
(87) Numéro de publication internationale: WO 2009/007559

(56) Documents cités:
- EP-A- 0 200 634
- DE-A1- 4 040 606
- FR-A- 2 075 659

## Description

La présente invention concerne un dispositif d'amortissement d'oscillation de torsion pour embrayage à friction, notamment pour véhicule automobile, du type comportant un double amortisseur perfectionné.

Dans un véhicule automobile, un embrayage à friction constitue un élément d'une chaîne cinématique et a pour fonction de transmettre un couple entre un élément rotatif d'entrée et un élément rotatif de sortie, par pincement de la friction entre des plateaux de pression et de réaction liés en rotation avec un moteur.

En général, l'élément d'entrée est formé par un disque de friction et l'élément de sortie est lié en rotation, avec ou sans jeu angulaire, à un moyeu lié en rotation avec un arbre d'entrée de boîte de vitesses.

L'embrayage à friction a aussi pour fonction d'assurer la continuité du couple transmis et de filtrer les vibrations en provenance du moteur, notamment grâce à des moyens d'amortissement comportant des organes élastiques et des moyens de frottement.

On connaît déjà, dans l'état de la technique, un disque d'embrayage à friction, notamment pour véhicule automobile, du type comportant un amortisseur simple ou double.

En général un amortisseur simple comporte un flasque communément appelé voile intercalé entre deux pièces dites usuellement rondelles de guidage. Ces deux rondelles de guidage sont habituellement liées entre elles en rotation.

On notera que l'amortisseur est dit « symétrique » lorsque le disque de friction est solidaire du voile.

Par ailleurs, l'amortisseur est dit « asymétrique » lorsque le disque de friction est solidaire de l'une des rondelles de guidage.

On appelle double amortisseur (« dual damper » en anglais) un dispositif d'amortissement comprenant deux amortisseurs couplés en parallèle. Cela peut être assuré par le fait que les éléments d'entrée des amortisseurs sont reliés rigidement entre eux. Ainsi, la transmission de l'effort se fait alors directement des éléments d'entrée au moyeu (sens direct) ou inversement, par exemple quand le véhicule est en phase de freinage avec utilisation du frein moteur, la transmission de l'effort se fait du moyeu aux éléments d'entrée (sens rétrograde), par l'intermédiaire des amortisseurs en parallèle et non pas comme dans le cas des amortisseurs couplés en série, tout d'abord par l'un et ensuite exclusivement par l'autre.

Autrement dit, quand le moyeu tourne relativement à l'élément d'entrée du double amortisseur, l'action des deux amortisseurs s'ajoute de sorte qu'avec une construction relativement compacte, on peut obtenir une action d'amortissement plus importante qu'avec des amortisseurs simple ou couplés en série.

Les doubles amortisseurs sont utilisés notamment pour les véhicules industriels. En effet, les couples à transmettre sont très importants, une solution consiste alors à utiliser un double amortisseur pouvant amortir des couples importants et étant plus robuste que les amortisseurs simples ou couplés en série. Un tel double amortisseur comporte deux amortisseurs montés en parallèle. Chaque amortisseur comportant :
- des éléments rotatifs d'entrée et de sortie sensiblement coaxiaux,
- un premier élément de couplage, de forme générale de révolution, solidaire en rotation de l'élément rotatif d'entrée,
- un autre élément de couplage, de forme générale de révolution, solidaire en rotation de l'élément rotatif de sortie,
- des moyens d'amortissement comprenant des organes élastiques à effet circonférentiel portés par les premier et deuxième éléments de couplage.

Un tel amortisseur est décrit par exemple dans le document FR 2 581 143.

Habituellement, les éléments rotatifs de sortie de chacun des deux amortisseurs comprennent un ensemble de cannelures aptes à s'engrener avec une denture correspondante sur la périphérie d'un moyeu entraînant en rotation un arbre de boîte de vitesses. Les deux ensembles de cannelures de l'état de la technique sont conformés de manière à engrener simultanément les dents à la périphérie du moyeu.

Lors du contact des cannelures avec les dents du moyeu, il se produit une rupture de pente sur la courbe de réponse du couple transmis en fonction de l'angle de rotation du double amortisseur.

L'utilisation de double amortisseur avec des ressorts dont les raideurs sont de plus en plus importantes accentue d'autant plus le phénomène de rupture de pente. De plus, la valeur de précharge des ressorts accentue aussi le phénomène de rupture de pente, or dans un double amortisseur les deux amortisseurs étant montés en parallèle la valeur de la précharge est doublée.

Cette rupture de pente est à l'origine d'un bruit important au niveau de l'embrayage, ainsi que d'une usure prématurée des cannelures et peut conduire à des à-coups ressentis par le conducteur et/ou le passager.

L'invention a notamment pour but de remédier à ce problème.

A cet effet, l'invention a pour objet un dispositif d'amortissement d'oscillation de torsion pour embrayage à friction, notamment pour véhicule automobile, du type comportant un système d'amortisseur susceptible de passer le couple moteur comprenant:
- un élément rotatif d'entrée,
- des premier et deuxième éléments de couplage, de forme générale de révolution, solidaires en rotation de l'élément rotatif d'entrée,
- un troisième élément de couplage, de forme générale de révolution, solidaire en rotation d'un premier élément rotatif de sortie,
- un quatrième élément de couplage de forme générale de révolution, solidaire en rotation d'un deuxième élément rotatif de sortie,
- des moyens d'amortissement comprenant des organes élastiques, notamment à effet circonférentiel, portés respectivement par les premier et troisième éléments de couplage, et par les deuxième et quatrième éléments de couplage,
- le premier, respectivement deuxième, élément rotatif de sortie comprenant un premier, respectivement deuxième, moyen d'engrènement sur le contour radialement interne du premier, respectivement deuxième, élément rotatif de sortie,
- les premier et deuxième moyen d'engrènement étant aptes à engrener une denture correspondante sur la périphérie d'un moyeu,
le dispositif étant tel que le premier moyen d'engrènement engrène la denture du moyeu avant que le deuxième moyen d'engrènement n'engrène ladite denture dudit moyeu, et tel que
les premier et deuxième moyen d'engrènement sont aptes à s'engrener avec une denture correspondante sur la périphérie dudit moyeu avec un jeu circonférentiel prédéterminé.

L'utilisation de ces premier et deuxième moyens d'engrènement permet de découpler l'entrée en action des deux amortisseurs montés en parallèle. Avantageusement la rupture de pente s'en trouve diminuée, ainsi que le bruit provoqué par cette rupture. De plus, les cannelures sont ainsi préservées. Un tel dispositif selon l'invention est différent de l'art antérieur où les amortisseurs se présentent en série (comme dans le document DE-40 40 606 A1).

Un dispositif d'amortissement selon l'invention peut en outre comporter l'une ou plusieurs des caractéristiques optionnelles ci-dessous, considérées individuellement ou selon toutes les combinaisons possibles:
- lesdits premier et/ou deuxième moyen d'engrènement se compose d'un premier et/ou deuxième ensemble de cannelures ;
- toutes les cannelures d'un même ensemble sont sensiblement identiques entre elles ;
- les bords d'attaque des cannelures du premier ensemble de cannelures sont décalés radialement d'un angle α notamment supérieur ou égal à 0,5 degré et inférieur ou égal à 5 degrés des bords d'attaque des cannelures du deuxième ensemble de cannelures, de préférence l'angle α est supérieur ou égal à 1 degré et/ou inférieur ou égale à 3 degrés;
- les cannelures du premier ensemble de cannelures sont identiques aux cannelures du deuxième ensemble de cannelures;
- les cannelures du premier ensemble de cannelures présentent une dimension circonférentielle inférieure aux cannelures du deuxième ensemble de cannelures ;
- le premier élément rotatif de sortie et le troisième élément de couplage sont conformés en une seule pièce ;
- le deuxième élément rotatif de sortie et le quatrième élément de couplage sont conformés en une seule pièce ;
- les premier et troisième éléments de couplage se composent de rondelles de guidage et les deuxième et quatrième éléments de couplage sont des voiles ;
- les premier et troisième éléments de couplage sont des voiles et les deuxième et quatrième éléments de couplage se composent de rondelles de guidage ;
- l'amortisseur comprend de plus :
   - un troisième élément rotatif de sortie, comprenant un troisième ensemble de cannelures ménagées sur le contour radialement interne dudit élément rotatif de sortie, les cannelures dudit troisième ensemble de cannelures étant aptes à s'engrener sans jeu circonférentiel avec une denture correspondante sur la périphérie du moyeu,
   - un cinquième élément de couplage, de forme générale de révolution, solidaire en rotation d'un des troisième ou quatrième élément de couplage,
   - un sixième élément de couplage, de forme générale de révolution, solidaire en rotation du troisième élément rotatif de sortie,
   - des moyens d'amortissement comprenant des organes élastiques, notamment à effet circonférentiel, portés par les cinquième et sixième éléments de couplage ;
- le cinquième élément de couplage se compose de rondelles de guidage et le sixième élément de couplage est un voile ;
- les organes élastiques sont des ressorts hélicoïdaux.

Le décalage angulaire entre les bords d'attaque des cannelures du premier ensemble de cannelures et les bords d'attaque des cannelures du deuxième ensemble de cannelures permet de découpler l'entrée en action des deux amortisseurs montés en parallèle.

L'invention à également pour objet une chaine cinématique comprenant :
- un plateau et un contre plateau moteur, entraîné en rotation par un moteur,
- un dispositif d'amortissement entraîné en rotation par frottement entre le plateau et le contre plateau,
- le moyeu du dispositif d'amortissement transmettant le mouvement de rotation dudit dispositif d'amortissement à un arbre de boîte de vitesses,
   où ledit dispositif d'amortissement est conforme aux différents modes de réalisation possible de l'invention. L'invention sera mieux comprise à la lecture de la description qui va suivre, donnée uniquement à titre d'exemple et faite en se référant aux dessins annexés dans lesquels:
   - la figure 1 est une vue de face d'un dispositif selon un premier mode de réalisation de l'invention;
   - la figure 2 est une coupe axiale du dispositif selon le premier mode de réalisation sans les rondelles de guidage extérieures ;
   - la figure 3 est une vue de face agrandie du dispositif selon le premier mode de réalisation ;
   - la figure 4 est une coupe axiale d'un dispositif selon un deuxième mode de réalisation.

Pour des raisons de clarté, les différentes pièces représentées sur les figures ne sont pas nécessairement à l'échelle. On entend dans la suite de la description par direction axiale la direction sensiblement suivant l'axe de rotation du dispositif d'amortissement et par direction radiale la direction sensiblement perpendiculaire à ladite direction axiale.

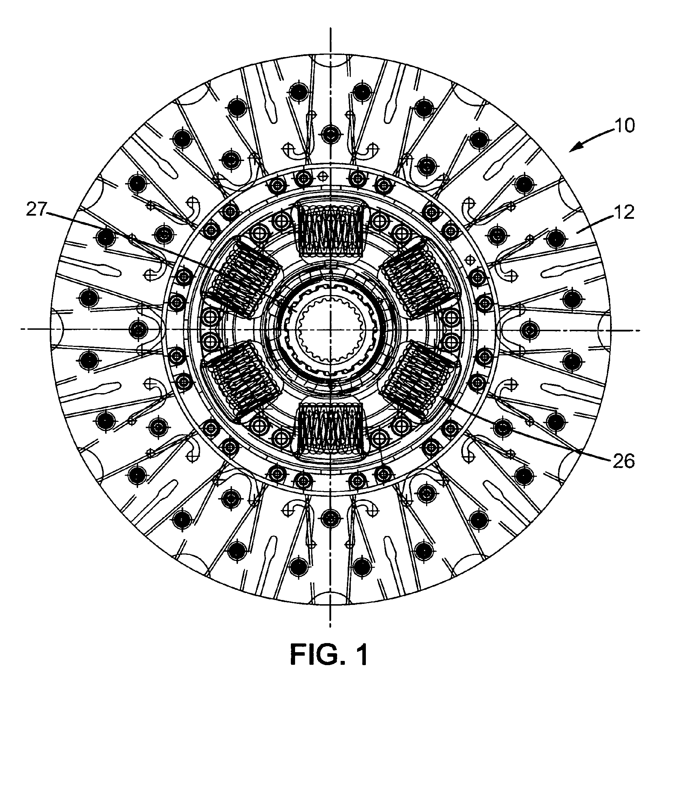

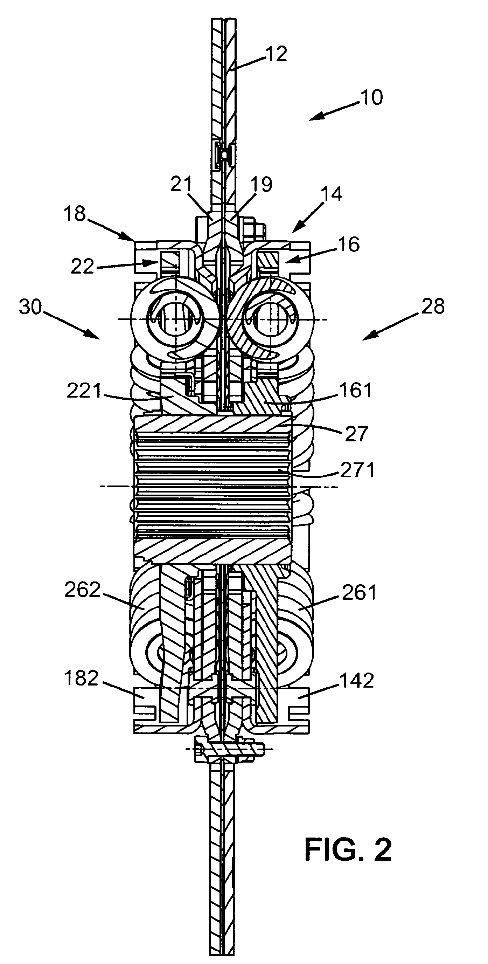

On a représenté sur les figures 1, 2 et 3 un dispositif d'amortissement d'oscillation de torsion notamment pour embrayage à friction, par exemple pour véhicule automobile, selon un premier mode de réalisation de l'invention.

Dans ce premier mode de réalisation, le dispositif d'amortissement 10 comprend un élément rotatif d'entrée 12, des premier 14 et deuxième 18 éléments de couplage solidaires en rotation de l'élément rotatif d'entrée 12, un troisième élément de couplage 16 solidaire en rotation d'un premier élément rotatif de sortie, un quatrième élément de couplage 22, solidaire en rotation d'un deuxième élément rotatif de sortie, des moyens d'amortissement 26 portés respectivement par les premier 14 et troisième 16 éléments de couplage, et par les deuxième 18 et quatrième 22 éléments de couplage.

Le dispositif 10 selon l'invention dispose d'un élément rotatif de sortie générale sous la forme d'un moyeu 27, de forme sensiblement annulaire, lié en rotation avec l'arbre d'entrée de la boîte de vitesses du véhicule automobile. A cet effet, le moyeu est muni de cannelures longitudinales internes 271 permettant de le solidariser en rotation avec une extrémité de l'arbre d'entrée de la boîte de vitesses.

L'élément rotatif d'entrée 12 est un disque de friction susceptible d'être lié en rotation avec un volant moteur par pincement entre des plateaux de pression (non représentés) et de réaction liés en rotation avec le volant moteur (non représenté).

Dans ce premier mode de réalisation, l'amortisseur du dispositif selon l'invention comprend deux amortisseurs asymétriques montés en parallèle.

Le premier amortisseur 28 comprend les premier 14 et troisième 16 éléments de couplage, le premier élément rotatif de sortie ainsi que des moyens d'amortissement 26.

Le deuxième amortisseur 30 comprend les deuxième 18 et quatrième 22 éléments de couplage, le deuxième élément rotatif de sortie ainsi que des moyens d'amortissement 26.

Le premier élément de couplage 14 est formé par des première (non représentée) et deuxième 142 pièces dites rondelles de guidage, la deuxième rondelle de guidage 142 est fixée au disque de friction 12 par l'intermédiaire d'un premier flasque 19, par exemple au moyen de rivets.

Les première et deuxième 142 rondelles de guidage sont solidarisées à l'aide de pattes axiales ménagées à la périphérie de la première rondelle de guidage.

Le troisième élément de couplage 16 est un flasque de forme générale annulaire appelé premier voile 161.

Le premier voile 161 est intercalé axialement entre les première et deuxième rondelles de guidage 142, co-axialement à celles-ci.

Le deuxième élément de couplage 18 est formé par des troisième (non représentée) et quatrième 182 rondelles de guidage, la deuxième rondelle de guidage 182 est fixée au disque de friction 12 par l'intermédiaire d'un deuxième flasque 21, par exemple au moyen de rivets.

Les troisième et quatrième 182 rondelles de guidage sont solidarisées à l'aide de pattes axiales ménagées à la périphérie de la troisième rondelle de guidage.

Le quatrième élément de couplage 22 est un deuxième voile 221.

Le deuxième voile 221 est intercalé axialement entre les troisième et quatrième rondelles de guidage 182, co-axialement à celles-ci.

Le dispositif d'amortissement 10 comporte également des moyens d'amortissement 26 destinés à amortir des vibrations en provenance du moteur.

Les moyens d'amortissement 26 comportent deux ensembles d'organes élastiques à action circonférentielle, tels que des ressorts hélicoïdaux de forte raideur 261, 262.

Les ressorts 261 du premier ensemble sont logés dans des fenêtres des première et deuxième rondelles de guidage 142 et dans des fenêtres du premier voile 161.

Ces ressorts 261 sont activés lors d'un débattement angulaire entre les première et deuxième rondelles de guidage 142 et le premier voile 161.

Les ressorts 262 du deuxième ensemble sont logés dans des fenêtres des troisième et quatrième rondelles de guidage 182 et dans des fenêtres du deuxième voile 221.

Ces ressorts 262 sont activés lors d'un débattement angulaire entre les troisième et quatrième rondelles de guidage 182 et le deuxième voile 221.

Les premier et deuxième éléments rotatif de sortie se composent chacun d'une pièce de forme générale annulaire.

Le premier élément rotatif de sortie comprend en périphérie interne, un premier ensemble de cannelures internes 201 qui engrène, avec un jeu circonférentiel prédéterminé, avec une denture 272 de la périphérie externe d'un moyeu 27. Toutes les cannelures 201 du premier ensemble de cannelures internes sont sensiblement identiques entre elles.

De manière classique, le premier élément rotatif de sortie est solidarisé à la périphérie interne du troisième élément de couplage 16.

Le deuxième élément rotatif de sortie comprend en périphérie interne, un deuxième ensemble de cannelures internes 241 qui engrène, avec un jeu circonférentiel prédéterminé, avec la denture 272 de la périphérie externe du moyeu 27. Toutes les cannelures 241 du deuxième ensemble de cannelures internes sont sensiblement identiques entre elles.

De manière classique, le deuxième élément rotatif de sortie est solidarisé à la périphérie interne du quatrième élément de couplage 22.

Les cannelures 201, 241 des premier et deuxième ensembles de cannelures disposent d'un bord dit d'attaque. Le bord d'attaque étant le bord de la cannelure qui lors de la transmission d'un couple par le dispositif d'amortissement vient en contact avec la denture 272 de la périphérie externe du moyeu 27.

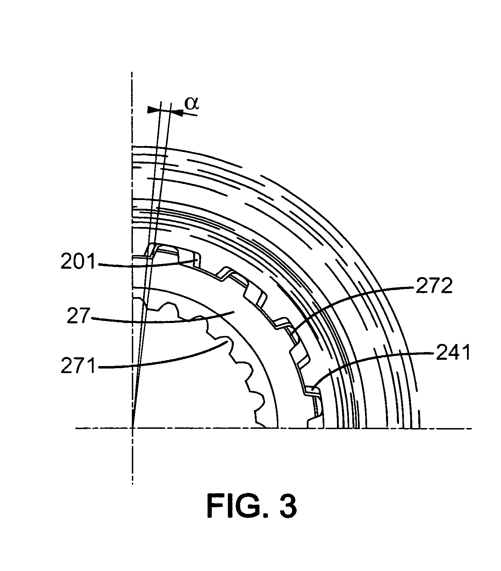

Comme représenté sur la figure 3, les bords d'attaques des cannelures 201 du premier ensemble de cannelures sont décalés angulairement par rapport aux bords d'attaques des cannelures 241 du deuxième ensemble de cannelures.

Ainsi, en fonctionnement les cannelures 201 du premier ensemble engrènent la denture 272 du moyeu 27 avant que les cannelures 241 du deuxième ensemble n'engrènent ladite denture 272 dudit moyeu 27.

On appelle « première position d'attaque » la position de l'ensemble des éléments du dispositif d'amortissement 10 lorsque les bords d'attaque des cannelures 201 du premier ensemble viennent en contact avec la denture 272 du moyeu 27.

On appelle « deuxième position d'attaque » la position de l'ensemble des éléments du dispositif d'amortissement 10 lorsque les bords d'attaque des cannelures 241 du deuxième ensemble viennent en contact avec la denture 272 du moyeu 27.

On définit l'angle α de décalage entre ces bords d'attaque comme étant l'angle de rotation, autour de l'axe du dispositif d'amortissement selon l'invention, nécessaire pour passer de la première position d'attaque à la deuxième position d'attaque.

L'angle α dans le mode de réalisation de la figure 3 est d'environ 2 degrés.

Ainsi, en cours de fonctionnement dans le sens direct du dispositif d'amortissement 10 selon l'invention, l'action du deuxième amortisseur 30 ne se superpose à l'action du premier amortisseur 28 qu'après une rotation d'un angle de 2 degrés. En cours de fonctionnement dans le sens rétrograde du dispositif d'amortissement 10 selon l'invention, l'action du premier amortisseur 28 ne se superpose à l'action du deuxième amortisseur 30 qu'après une rotation d'un angle de 2 degrés.

On peut ainsi réaliser un dispositif d'amortissement dans lequel les différents amortisseurs, qui peuvent avoir des caractéristiques de torsion et/ou d'amortissement différentes, entrent en action successivement et la courbe de réponse résultante commence par exemple avec une faible action de torsion et d'amortissement qui croît ensuite progressivement avec l'angle de rotation.

Avantageusement, cela permet de dimensionner les bruits qui peuvent se produire lors de la mise en action des amortisseurs 28, 30, ainsi que de diminuer l'usure des cannelures 201, 241 des amortisseurs et éviter les à-coups pouvant être ressentis par le conducteur et/ou les passagers.

Selon une variante non représentée, le décalage angulaire peut être obtenu par exemple en montant le premier élément rotatif de sortie sensiblement solidaire en rotation avec le moyeu 27, et le deuxième élément rotatif de sortie avec un jeu circonférentiel prédéterminé autour du moyeu 27.

Avantageusement, ce mode de réalisation permet de n'avoir qu'une seule rupture de pente dans la courbe de réponse du dispositif d'amortissement 10 selon l'invention.

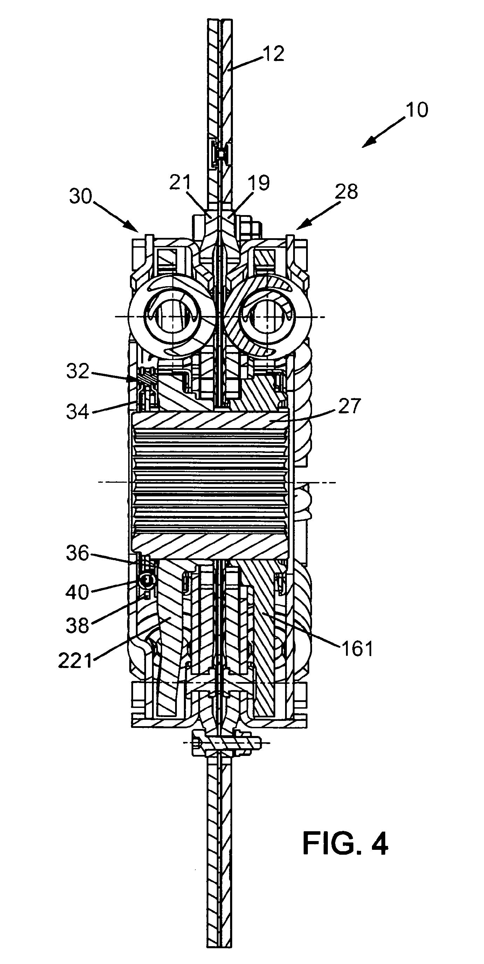

Sur la figure 4, les éléments analogues à ceux des figures 1 à 3 sont désignés par des références identiques.

Selon un deuxième mode de réalisation décrit en référence à la figure 4, le dispositif d'amortissement 10 comprend un élément rotatif d'entrée 12, un premier amortisseur 28, un premier flasque 19 associé au premier amortisseur, un deuxième amortisseur 30 monté en série avec un pré-amortisseur 32 et un deuxième flasque 21 associé au deuxième amortisseur.

Le dispositif 10 selon ce deuxième mode de réalisation dispose d'un élément rotatif de sortie sous la forme d'un moyeu 27, commun aux deux amortisseurs 28, 30 et au pré-amortisseur 32.

L'élément rotatif d'entrée 12 est un disque de friction susceptible d'être lié en rotation avec un volant moteur par pincement entre des plateaux de pression et de réaction liés en rotation avec le volant moteur.

Le premier amortisseur 28 et le premier flasque 19 sont disposés et montés tels que décrits dans le premier mode de réalisation de l'invention.

Le deuxième amortisseur 30 et le deuxième flasque 21 sont disposés et montés tels que décrits dans le premier mode de réalisation de l'invention.

Le pré-amortisseur 32 relie le voile 221 du deuxième amortisseur 30 et le moyeu 27.

Le pré-amortisseur 32 comprend des première 34 et deuxième 36 rondelles de guidage. Ces rondelles de guidage 34, 36 sont solidarisées en rotation avec le voile 221.

Le pré-amortisseur 32 comporte également des moyens d'amortissement, sous la forme de ressorts hélicoïdaux 40 destinés à amortir des vibrations en provenance du moteur.

Un voile 38 de pré-amortisseur est intercalé axialement entre les deux rondelles de guidage 34, 36, co-axialement à celles-ci. Ce voile 38 est solidaire en rotation du moyeu 27, par exemple par engrènement avec la denture périphérique externe 272 du moyeu 27.

Les premier 28 et deuxième 30 amortisseurs ont un angle de décalage α d'environ 2 degrés.

En cours de fonctionnement du dispositif d'amortissement selon ce deuxième mode de réalisation, lorsqu'un couple est transmis du disque de friction 12 au moyeu 27, il passe tout d'abord par le pré-amortisseur 32.

Le pré-amortisseur 32 amortit les petites vibrations en provenance du moteur. Lorsque les ressorts hélicoïdaux 40 atteignent leur limite de compression, le dispositif d'amortissement 10 se trouve dans la première position d'attaque. Les bords d'attaques des cannelures du premier amortisseur 28 viennent en contact avec la denture 272 du moyeu 27. Après une rotation supplémentaire de 2 degrés, le dispositif d'amortissement 10 se trouve dans la deuxième position d'attaque. Les bords d'attaques des cannelures du deuxième amortisseur 30 viennent en contact avec la denture 272 du moyeu 27.

Avantageusement, ce mode de réalisation permet de réduire la rupture dans la courbe de réponse du dispositif d'amortissement 10. En effet, la présence du pré-amortisseur 32 implique une forte discontinué dans la courbe de réponse, lorsque les deux amortisseurs 28, 30 entrent en action simultanément. La réduction de cette discontinuité permet avantageusement de dimensionner les bruits et à-coups qui peuvent se produire lors de la mise en action des amortisseurs 28, 30, ainsi que de diminuer l'usure des cannelures 201, 241 des amortisseurs 28, 30.

Selon une variante du deuxième mode de réalisation non représentée, le pré-amortisseur peut être fixé au voile 161 du premier amortisseur 28.

On notera que l'invention n'est pas limitée aux modes de réalisations précédemment décrits.

En particulier, l'invention peut s'appliquer à un dispositif d'amortissement comportant plusieurs pré-amortisseurs.

## Revendications

1. Dispositif d'amortissement (10) d'oscillation de torsion pour embrayage à friction, notamment pour véhicule automobile, du type comportant un système d'amortisseur susceptible de passer le couple moteur comprenant:
• un élément rotatif d'entrée (12),
• des premier (14) et deuxième (18) éléments de couplage, de forme générale de révolution, solidaires en rotation de l'élément rotatif d'entrée (12),
• un troisième élément de couplage (16), de forme générale de révolution, solidaire en rotation d'un premier élément rotatif de sortie (161),
• un quatrième élément de couplage (22) de forme générale de révolution, solidaire en rotation d'un deuxième élément rotatif de sortie (221),
• des moyens d'amortissement (26) comprenant des organes élastiques (261, 262) portés respectivement par les premier (14) et troisième (16) éléments de couplage, et par les deuxième (18) et quatrième éléments (22) de couplage,
• le premier (161), respectivement deuxième (221), élément rotatif de sortie comprenant un premier (201), respectivement deuxième (241), moyen d'engrènement sur le contour radialement interne du premier (161), respectivement deuxième (221), élément rotatif de sortie,
• les premier (201) et deuxième (241) moyen d'engrènement étant aptes à engrener une denture (272) correspondante sur la périphérie d'un moyeu (27),
ledit dispositif (10) étant **caractérisé en ce que** le premier moyen d'engrènement (201) engrène la denture (272) du moyeu (27) avant que le deuxième (241) moyen d'engrènement n'engrène ladite denture (272) dudit moyeu (27), et **en ce que**
les premier (201) et deuxième (241) moyen d'engrènement sont aptes à s'engrener avec une denture (272) correspondante sur la périphérie dudit moyeu (27) avec un jeu circonférentiel prédéterminé.

2. Dispositif selon la revendication 1, **caractérisé en ce que** lesdits premier (201) et/ou deuxième (241) moyen d'engrènement se compose d'un premier et/ou deuxième ensemble de cannelures.

3. Dispositif selon la revendication précédente, **caractérisé en ce que** toutes les cannelures (201, 241) d'un même ensemble sont sensiblement identiques entre elles.

4. Dispositif selon l'une quelconque des revendications 2 ou 3, **caractérisé en ce que** les bords d'attaque des cannelures (201) du premier ensemble de cannelures sont décalés radialement d'un angle α des bords d'attaque des cannelures (241) du deuxième ensemble de cannelures.

5. Dispositif selon la revendication précédente, **caractérisé en ce que** l'angle α est supérieur ou égal à 0.5 degré, de préférence supérieur ou égal à 1 degré et/ou inférieur ou égal à 5 degrés, de préférence inférieur ou égal à 3 degrés.

6. Dispositif selon l'une quelconque des revendications 2 à 5, **caractérisé en ce que** les cannelures (201) du premier ensemble de cannelures sont identiques aux cannelures (241) du deuxième ensemble de cannelures.

7. Dispositif selon l'une quelconque des revendications 2 à 5, **caractérisé en ce que** les cannelures (201) du premier ensemble de cannelures présentent une dimension circonférentielle inférieure aux cannelures (241) du deuxième ensemble de cannelures.

8. Dispositif selon l'une quelconque des revendications précédentes, **caractérisé en ce que** le premier élément rotatif de sortie et le troisième élément de couplage (16) sont conformés en une seule pièce.

9. Dispositif selon l'une quelconque des revendications précédentes, **caractérisé en ce que** le deuxième élément rotatif de sortie et le quatrième élément de couplage (22) sont conformés en une seule pièce.

10. Dispositif selon l'une quelconque des revendications précédentes, **caractérisé en ce que** les premier (14) et troisième (16) éléments de couplage se composent de rondelles de guidage (141, 142, 181, 182) et les deuxième (18) et quatrième (22) éléments de couplage sont des voiles (201, 221).

11. Dispositif selon l'une quelconque des revendications 1 à 9, **caractérisé en ce que** les premier (14) et troisième (16) éléments de couplage sont des voiles et les deuxième (18) et quatrième (22) éléments de couplage se composent de rondelles de guidage.

12. Dispositif selon l'une quelconque des revendications précédentes, **caractérisé en ce que** l'amortisseur comprend de plus :
• un troisième élément rotatif de sortie, comprenant un troisième ensemble de cannelures ménagées sur le contour radialement interne dudit élément rotatif de sortie, les cannelures dudit troisième ensemble de cannelures étant aptes à s'engrener sans jeu circonférentiel avec une denture (272) correspondante sur la périphérie du moyeu (27),
• un cinquième élément de couplage (34, 36), de forme générale de révolution, solidaire en rotation d'un des troisième (16) ou quatrième (22) élément de couplage,
• un sixième élément de couplage (38), de forme générale de révolution, solidaire en rotation du troisième élément rotatif de sortie,
• des moyens d'amortissement comprenant des organes élastiques (40) portés par les cinquième (34,36) et sixième (38) éléments de couplage.

13. Dispositif selon la revendication précédente, **caractérisée en ce que** le cinquième (34,36) élément de couplage se compose de rondelles de guidage (34,36) et le sixième (38) élément de couplage est un voile (38).

14. Chaine cinématique comprenant :
• un plateau et un contre plateau moteur, entraîné en rotation par un moteur,
• un dispositif d'amortissement entraîné en rotation par frottement entre le plateau et le contre plateau,
• le moyeu du dispositif d'amortissement transmettant le mouvement de rotation dudit dispositif d'amortissement à un arbre de boîte de vitesses,
**caractérisé en ce que** ledit dispositif d'amortissement est conforme à l'une quelconque des revendications précédentes.

## Patentansprüche

1. Vorrichtung (10) zur Torsionsschwingungsdämpfung für eine Reibungskupplung, insbesondere für ein Kraftfahrzeug, von der Art, die ein Dämpfersystem aufweist, das das Motordrehmoment passieren kann, die enthält:
• ein drehendes Eingangselement (12),
• erste (14) und zweite (18) Kopplungselemente von allgemein drehsymmetrischer Form, die in Drehung fest mit dem drehenden Eingangselement (12) verbunden sind,
• ein drittes Kopplungselement (16) von allgemein drehsymmetrischer Form, das in Drehung fest mit einem ersten drehenden Ausgangselement (161) verbunden ist,
• ein viertes Kopplungselement (22) von allgemein drehsymmetrischer Form, das in Drehung fest mit einem zweiten drehenden Ausgangselement (221) verbunden ist,
• Dämpfungseinrichtungen (26), die elastische Organe (261, 262) enthalten, welche vom ersten (14) und dritten (16) Kopplungselement bzw. vom zweiten (18) und vierten (22) Kopplungselement getragen werden,
• wobei das erste (161) bzw. zweite (221) drehenden Ausgangselement eine erste (201) bzw. zweite (241) Eingriffseinrichtung auf dem radial inneren Umriss des ersten (161) bzw. zweiten (221) drehenden Ausgangselements enthält,
• wobei die erste (201) und zweite (241) Eingriffseinrichtung in eine entsprechende Zahnung (272) auf dem Umfang einer Nabe (27) eingreifen können,
wobei die Vorrichtung (10) **dadurch gekennzeichnet ist, dass** die erste Eingriffseinrichtung (201) in die Zahnung (272) der Nabe (27) eingreift, ehe die zweite (241) Eingriffseinrichtung in die Zahnung (272) der Nabe (27) eingreift, und dass die erste (201) und zweite (241) Eingriffseinrichtung in eine entsprechende Zahnung (272) am Umfang der Nabe (27) mit einem vorbestimmten Umfangsspiel eingreifen können.

2. Vorrichtung nach Anspruch 1, **dadurch gekennzeichnet, dass** die erste (201) und/oder zweite (241) Eingriffseinrichtung aus einer ersten und/oder zweiten Einheit von Hohlkehlen besteht.

3. Vorrichtung nach dem vorhergehenden Anspruch, **dadurch gekennzeichnet, dass** alle Hohlkehlen (201, 241) der gleichen Einheit im Wesentlichen einander gleich sind.

4. Vorrichtung nach einem der Ansprüche 2 oder 3, **dadurch gekennzeichnet, dass** die Vorderkanten der Hohlkehlen (201) der ersten Einheit von Hohlkehlen radial um einen Winkel α zu den Vorderkanten der Hohlkehlen (241) der zweiten Einheit von Hohlkehlen versetzt sind.

5. Vorrichtung nach dem vorhergehenden Anspruch, **dadurch gekennzeichnet, dass** der Winkel α größer als oder gleich 0,5 Grad, vorzugsweise größer als oder gleich 1 Grad und/oder kleiner als oder gleich 5 Grad, vorzugsweise kleiner als oder gleich 3 Grad ist.

6. Vorrichtung nach einem der Ansprüche 2 bis 5, **dadurch gekennzeichnet, dass** die Hohlkehlen (201) der ersten Einheit von Hohlkehlen gleich den Hohlkehlen (241) der zweiten Einheit von Hohlkehlen sind.

7. Vorrichtung nach einem der Ansprüche 2 bis 5, **dadurch gekennzeichnet, dass** die Hohlkehlen (201) der ersten Einheit von Hohlkehlen eine kleinere Umfangsabmessung als die Hohlkehlen (241) der zweiten Einheit von Hohlkehlen haben.

8. Vorrichtung nach einem der vorhergehenden Ansprüche, **dadurch gekennzeichnet, dass** das erste drehende Ausgangselement und das dritte Kopplungselement (16) aus einem Stück ausgebildet sind.

9. Vorrichtung nach einem der vorhergehenden Ansprüche, **dadurch gekennzeichnet, dass** das zweite drehende Ausgangselement und das vierte Kopplungselement (22) aus einem Stück ausgebildet sind.

10. Vorrichtung nach einem der vorhergehenden Ansprüche, **dadurch gekennzeichnet, dass** das erste (14) und dritte (16) Kopplungselement aus Führungsscheiben (141, 142, 181, 182) bestehen und das zweite (18) und vierte (22) Kopplungselement Scheiben (201, 221) sind.

11. Vorrichtung nach einem der Ansprüche 1 bis 9, **dadurch gekennzeichnet, dass** das erste (14) und dritte (16) Kopplungselement Scheiben sind und das zweite (18) und vierte (22) Kopplungselement aus Führungsscheiben bestehen.

12. Vorrichtung nach einem der vorhergehenden Ansprüche, **dadurch gekennzeichnet, dass** der Dämpfer außerdem enthält:
• ein drittes drehendes Ausgangselement, das eine dritte Einheit von Hohlkehlen enthält, die am radial inneren Umriss des drehenden Ausgangselements ausgespart sind, wobei die Hohlkehlen der dritten Einheit von Hohlkehlen ohne Umfangsspiel in eine entsprechende Zahnung (272) am Umfang der Nabe (27) eingreifen können,
• ein fünftes Kopplungselement (34, 36) von allgemein drehsymmetrischer Form, das in Drehung fest mit einem der dritten (16) oder vierten (22) Kopplungselemente verbunden ist,
• ein sechstes Kopplungselement (38) von allgemein drehsymmetrischer Form, das in Drehung fest mit dem dritten drehenden Ausgangselement verbunden ist,
• Dämpfungseinrichtungen, die elastische Organe (40) enthalten, welche von den fünften (34, 36) und sechsten (38) Kopplungselementen getragen werden.

13. Vorrichtung nach dem vorhergehenden Anspruch, **dadurch gekennzeichnet, dass** das fünfte (34, 36) Kopplungselement aus Führungsscheiben (34, 36) besteht und das sechste (38) Kopplungselement eine Scheibe (38) ist.

14. Kinematische Kette, die enthält:
• eine Platte und eine Antriebsgegenplatte, die von einem Motor in Drehung versetzt wird,
• eine Dämpfungsvorrichtung, die durch Reibung zwischen der Platte und der Gegenplatte in Drehung versetzt wird,
• wobei die Nabe der Dämpfungsvorrichtung die Drehbewegung der Dämpfungsvorrichtung an eine Getriebewelle überträgt,
**dadurch gekennzeichnet, dass** die Dämpfungsvorrichtung einem der vorhergehenden Ansprüche entspricht.

## Claims

1. Device (10) for damping torsion oscillation in a friction clutch, in particular for a motor vehicle, of the type having a damper system capable of passing on the engine torque and comprising:
• a rotary input element (12),
• first (14) and second (18) coupling elements of axisymmetric overall shape coupled in rotation to the rotary input element (12),
• a third coupling element (16) of axisymmetric overall shape coupled in rotation to a first rotary output element (161),
• a fourth coupling element (22) of axisymmetric overall shape coupled in rotation to a second rotary output element (221),
• damping means (26) comprising elastic members (261, 262) borne respectively by the first (14) and third (16) coupling elements, and by the second (18) and fourth (22) coupling elements,
• the first (161) and second (221) rotary output elements comprising a first (201) and second (241) meshing means respectively on the radially internal contour of the first (161) and second (221) rotary output elements respectively,
• the first (201) and second (241) meshing means being able to mesh with corresponding teeth (272) on the periphery of a hub (27),
the said device (10) being **characterized in that** the first meshing means (201) meshes with the teeth (272) of the hub (27) before the second meshing means (241) meshes with the said teeth (272) of the said hub (27), and **in that** the first (201) and second (241) meshing means are able to mesh with corresponding teeth (272) on the periphery of the said hub (27) with a predetermined circumferential clearance.

2. Device according to Claim 1, **characterized in that** the said first (201) and/or second (241) meshing means are/is composed of a first and/or second set of splines.

3. Device according to the preceding claim, **characterized in that** all the splines (201, 241) of one and the same set are substantially identical to one another.

4. Device according to either one of Claims 2 and 3, **characterized in that** the leading edges of the splines (201) of the first set of splines are offset radially by an angle α from the leading edges of the splines (241) of the second set of splines.

5. Device according to the preceding claim, **characterized in that** the angle α is greater than or equal 0.5 degree, preferably greater than or equal to 1 degree and/or less than or equal to 5 degrees, preferably less than or equal to 3 degrees.

6. Device according to any one of Claims 2 to 5, **characterized in that** the splines (201) of the first set of splines are identical to the splines (241) of the second set of splines.

7. Device according to any one of Claims 2 to 5, **characterized in that** the splines (201) of the first set of splines have a circumferential dimension which is less than that of the splines (241) of the second set of splines.

8. Device according to any one of the preceding claims, **characterized in that** the first rotary output element and the third coupling element (16) are formed in one piece.

9. Device according to any one of the preceding claims, **characterized in that** the second rotary output element and the fourth coupling element (22) are formed in one piece.

10. Device according to any one of the preceding claims, **characterized in that** the first (14) and third (16) coupling elements are composed of guide washers (141, 142, 181, 182) and the second (18) and fourth (22) coupling elements are webs (201, 221).

11. Device according to any one of Claims 1 to 9, **characterized in that** the first (14) and third (16) coupling elements are webs and the second (18) and fourth (22) coupling elements are composed of guide washers.

12. Device according to any one of the preceding claims, **characterized in that** the damper additionally comprises:
• a third rotary output element comprising a third set of splines formed on the radially internal contour of the said rotary output element, the splines of the said third set of splines being able to mesh without circumferential clearance with corresponding teeth (272) on the periphery of the hub (27),
• a fifth coupling element (34, 36) of axisymmetric overall shape coupled in rotation to one of the third (16) or fourth (22) coupling elements,
• a sixth coupling element (38) of axisymmetric overall shape coupled in rotation to the third rotary output element,
• damping means comprising elastic members (40) borne by the fifth (34, 36) and sixth (38) coupling elements.

13. Device according to the preceding claim, **characterized in that** the fifth (34, 36) coupling element is composed of guide washers (34, 36) and the sixth (38) coupling element is a web (38).

14. Drivetrain comprising:
• a plate and an engine counter-plate which is rotated by an engine,
• a damping device rotated by friction between the plate and the counter-plate,
• the hub of the damping device transmitting the rotational movement of the said damping device to a gearbox shaft,
**characterized in that** the said damping device is in accordance with any one of the preceding claims.
